# EUROPÄISCHE PATENTSCHRIFT

(11) **EP 0 788 966 B1**
(45) Veröffentlichungstag und Bekanntmachung des Hinweises auf die Patenterteilung: **23.04.2003**
(21) Anmeldenummer: 96114922.6
(22) Anmeldetag: 18.09.1996
(51) Int. Cl.: B62D 55/30

(54) **Vorrichtung zum Spannen und Abfedern des Leitrades von Kettenfahrzeugen**
Tensioning and shock-absorption device for the idler wheel of a tracked vehicle
Dispositif pour la tension et la suspension de la roue directrice de véhicules à chenilles

(30) Priorität: 13.10.1995 DE 19538222
(43) Veröffentlichungstag der Anmeldung: 13.08.1997
(73) Patentinhaber: Intertractor GmbH, 58273 Gevelsberg (DE)
(72) Erfinder: Humbeck, Holger, 44803 Bochum (DE); Krämer, Heinz-Dieter, 58638 Iserlohn (DE)
(74) Vertreter: Köchling, Conrad-Joachim

(56) Entgegenhaltungen:
- CH-A- 362 326
- DE-A- 2 014 301
- DE-C- 456 065
- DE-U- 29 606 295

## Beschreibung

Die Erfindung betrifft eine Vorrichtung zum Spannen und Abfedern des Leitrades von Kettenfahrzeugen und dergleichen mit bandförmigen Elementen angetriebenen Fahrzeugen, oder des Leitrades von Band- oder Kettenförderern, bestehend aus einer mechanischen Federeinheit mit Spannplatten sowie vorzugsweise einer hydraulischen Spanneinheit, wobei die Vorrichtung zwischen Gestellteilen des Leitrades und des Rahmens des Fahrzeuges oder des Förderers einspannbar ist.

Bei derartigen aus der DE 20 14 301 A bekannten Kettenspann- und Federvorrichtungen für Gleiskettenfahrzeuge sind Spannfedern vorgesehen, die aus zwei gegensinnigen Tellerfederpaketen bestehen.

Ähnliche Vorrichtungen sind beispielsweise aus der DE 27 58 586 C2, der DE 27 41 105 C3, der GB 1 466 133, der DE 40 25 929 A1 bzw. der WO 95/02 533 bekannt.

Bei diesen Vorrichtungen werden als mechanische Federeinheit Schraubenfedern eingesetzt.

Solche Schraubenfedern reichen aber häufig für die auftretenden Belastungen nicht aus, da mit Schraubenfedern bei den üblichen Abmessungen die notwendigen Vorspannkräfte nicht aufgebaut werden können. Man ist daher schon dazu übergegangen, Elastomerelemente anstelle der mechanischen Schraubenfedern einzusetzen. Dies ist aber insofern nachteilig, als deren E-Modul stark temperaturabhängig ist. Man ist auch schon dazu übergegangen, Gasspeicher (Stickstoffspeicher) anstelle mechanischer Schraubenfedern einzusetzen. Diese Gasspeicher bereiten aber erhebliche Probleme bei der Abdichtung.

Aus der DE 456 065 C ist ein Ringfederpaket für einen Schienenfahrzeugpuffer bekannt, bei dem zum Erzielen einer anfänglichen weichen und dann stark zunehmenden Federung die axialen Abstände zwischen einigen äußeren und inneren Federringen kleiner als die axialen Abstände zwischen den jeweils zugehörigen inneren und äußeren Federringen sind. Die dadurch erzeugte Federkennlinie zeichnet sich durch einen flachen, weitgehend linearen Anstieg bis zu einem Knick in Steile und darauf folgend einen steileren, linearen Anstieg bis zum Spitzenwert aus. Bei der Rückstellung fällt der Spitzenwert der Federkraft extrem steil bis auf eine geringe Rückstellkraft ab.

Ausgehend von dem eingangs bezeichneten Stand der Technik liegt der Erfindung die Aufgabe zugrunde, eine Vorrichtung gattungsgemäßer Art zu schaffen, bei der bei üblichen relativ geringen Abmessungen hohe Vorspannkräfte erreicht werden können.

Zur Lösung dieser Aufgabe wird vorgeschlagen, dass die Federeinheit aus konzentrisch angeordneten, abwechselnd zug- und druckbeanspruchten Ringen mit konischen Wirkflächen mit mehreren koaxial zueinander angeordneten Außenringen und Innenringen oder aus mehreren zueinander koaxial angeordneten ineinander gesetzten oder aneinander gesetzten solchen Federeinheiten oder mehreren parallel zueinander angeordneten solchen Federeinheiten besteht.

Solche Federeinheiten sind im Stand der Technik an sich bekannt, wozu auf die Literaturstelle Roloff/Matek Maschinenelemente, 9. Auflage, 1984/85, Seite 270, 271 verwiesen wird. Die Federn bestehen aus mehreren koaxial zueinander angeordneten geschlossenen, vorzugsweise gefetteten Außen- und Innenringen, die mit kegligen Flächen ineinandergreifen. Die axiale Druckkraft setzt sich über die Kegelflächen in Zugspannungen für den Außenring und in Druckspannungen für den Innenring um. Infolge elastischer Verformung schieben sich die Ringe ineinander, so daß sich die Federsäule verkürzt, und zwar um so mehr, je kleiner der Kegelwinkel ist. Üblicherweise beträgt der Kegelwinkel etwa 12 bis 15°, um ein Steckenbleiben der Ringe bei Entlastung zu vermeiden. In der Einbausituation sind diese Federn in vorgespanntem Zustand eingebaut, da bei einer mindestens 5 bis 10 %igen Vorspannung (5 bis 10 % des möglichen Federweges), eine stabile Lage der einzelnen Ringe gewährleistet ist. Üblicherweise bestehen solche Federn aus einer Vielzahl von Ringen, wobei die Endringe meistens als halbe Innenringe ausgebildet sind.

Vorzugsweise sind diese Federn gegen Feuchtigkeit und Staub geschützt, um die Schmierung nicht zu gefährden.

Solche Federn sind auch in dem Katalogblatt R 56, Ausgabe Juli 1993, der Fa. Ringfeder GmbH, dargestellt und beschrieben.

Der Einsatz solcher Federeinheiten bei den erfindungsgemäßen Vorrichtungen ermöglicht es nicht nur, bei relativ geringen üblichen Abmessungen erhebliche Vorspannkräfte von beispielsweise 750 kN aufzubauen, sondern ein Vorteil besteht auch darin, dass sie eine Blocklast von bis zu 5000 kN aufnehmen können, was für den angegebenen Einsatz und Verwendungszweck ein wesentlicher Vorteil ist. Weder solche Vorspannkräfte, noch solche Blocklasten können mit mechanischen Schraubenfedern üblicher Abmessungen oder mit Elastomerfederelementen oder Gasspeicherfederelementen erzielt werden.

Beim erfindungsgemäßen Einsatz können die Federeinheiten zunächst auf 5 bis 10% vorgespannt werden, so daß das Federpaket stabilisiert ist. Nach dem Einbau kann eine Vorspannung von bis zu 50% erzeugt werden.

Bevorzugt ist dabei vorgesehen, dass Federeinheiten mit mindestens acht Außenringen und Innenringen verwendet werden.

Der Durchmesser solcher Ringelemente kann unterschiedlich sein, beispielsweise 240 mm bei üblichen Maschinen oder auch 400 mm bei sehr großen Maschinen, wobei die Länge der einzelnen Ringelemente etwa 80 mm betragen kann. Auch andere Abmessungen sind selbstverständlich möglich und brauchbar, jedoch wird die angegebene Dimensionierung als vorteilhaft angesehen, sofern die üblichen Abmessungen eingehalten werden sollen und der Einsatz solcher Vorrichtungen bei üblichen Baugrößen und üblichen räumlichen Verhältnissen ermöglicht sein soll.

Vorzugsweise ist auch vorgesehen, dass die Federeinheit oder Federeinheitenvon einem Schutzrohr eng umfaßt ist oder sind, welches an der an Gestellteilen des Fahrzeugrahmens fixierbaren Spannplatte befestigt ist und in welches die mit der hydraulischen Spanneinheit beaufschlagbare Spannplatte unter zunehmender Vorspannung der Federeinheit einschiebbar ist. Durch ein solches Schutzrohr ist nicht nur sichergestellt, dass das Eindringen von Schmutz oder Staub verhindert ist, sondern das Schutzrohr dient zudem als äußere Stütze für die Federeinheit, so dass diese bei Belastung nicht ausbiegen kann.

Desweiteren kann bevorzugt vorgesehen sein, dass das Schutzrohr an seinem fahrzeugrahmenseitigen Ende durch die Spannplatte und an seinem dem Leitrad zugewandten Ende durch eine Deckplatte verschlossen ist, wobei die Deckplatte von einem Stößel der anderen Spannplatte oder von einem auf diese einwirkenden Stößel der hydraulischen Spanneinheit durchgriffen oder durchgreifbar ist.

Die Spannplatte bzw. Deckplatte ist vorzugsweise mit dem Schutzrohr schraubverbunden, so dass die Federeinheit insgesamt gekapselt angeordnet ist. Mittels der schraubbaren Deckplatte oder Spannplatte kann sie vorgespannt werden. Die Deckplatte oder die am anderen Ende des Schutzrohres angeordnete Spannplatte kann in das Schutzrohr eingeschraubt werden, sofern beide Teile mit einer entsprechenden Gewindeausbildung versehen sind. Die Deckplatte oder Spannplatte kann auch mit diese durchgreifenden, in einen Kragen des Schutzrohres einschraubbaren Schrauben angeschraubt sein.

Als Montagehilfe kann vorgesehen sein, dass die verschiebliche Spannplatte einen Zuganker aufweist, der an der rahmenfesten Spannplatte axial verschieblich gehaltert und dessen Wirklänge zum Zwecke der Einstellung der Vorspannung der Federeinheit verkürzbar ist.

Der Zuganker kann durch ein Seil, insbesondere Stahlseil, oder durch eine formsteife Stange oder dergleichen gebildet sein.

Dabei kann zudem vorgesehen sein, dass das axial verschiebliche Ende des Zugankers in einer an der Spannplatte ausgebildeten Kammer angeordnet ist, deren Länge (in axialer Erstreckung des Zugankers) mindestens gleich oder auch größer ist als dem maximalen Federweg entspricht, wobei auf das in der Kammer befindliche Ende des Zugankers eine Spannmutter aufgeschraubt ist, die sich an Kammerteilen als Widerlager unmittelbar oder mittelbar abstützt. Die Abstützung erfolgt in der Vormontagelage. Nach dem Vorspannen der Federeinheit in der Arbeitslage stützt sich die Spannmutter nicht mehr an Kammerteilen ab, sondern sie hat dann Abstand von dem entsprechenden Widerlager.

Zudem kann vorgesehen sein,dass am Ende des Zugankers eine Führungs- und/oder Dichtscheibe gehaltert ist, die in der Kammer in deren Längsrichtung verschieblich ist und die sich an der Kammerwandung über ihren gesamten Umfang führend und/oder dichtend abstützt. Es kann auch die Führungs- und/oder Dichtscheibe fest in der Kammer gehalten sein und der Zuganker kann dann eine Lochung der Scheibe durchgreifen, so dass er axial verschiebbar ist.

Der Zuganker ist im Wesentlichen nur eine Montagehilfe, da ein Ausrichten der Federelemente im Schutzrohr nicht mehr möglich ist. Zum Einbau der Federeinheit wird diese auf den Zuganker aufgeschoben und durch eine Stützplatte, z.B. als Bestandteil der Kammer, vorgespannt, sofern eine Spannmutter angezogen wird. Die Vorspannung dient zur Montage und betätigt ca. 5 bis 10 %. In eingebautem Endzustand ist die Federeinheit durch die Spannplatten zunehmend vorspannbar, z.B. auf eine Vorspannung von 50% der Nennkraft. In diesem Zustand ist der Zuganker frei von Zugkräften (unbelastet), übernimmt aber die Funktion der Führung (Kolben-/Stößelführung). Durch Einschrauben der Deckplatte in das Schutzrohr kann die Vorspannung entsprechend erhöht werden.

Beim bestimmungsgemäßen Einsatz, insbesondere beim Einsatz in Raupenfahrzeugen ist die Dämpfung der Federeinheit vorteilhaft. Hierdurch werden die Kräfte beim Zurückfedern erheblich kleiner als bei bisher üblichen mechanischen Federeinheiten und die Stoßbelastung der angeschlossenen Bauteile (Kette, Leitrad, Fahrzeugrahmen, Verschraubung des Schutzrohres) wird verringert. Zudem hat das Schutzrohr, das die Federeinheit umgibt, eine wesentlich höhere Beanspruchbarkeit als üblicherweise bei Schraubenfedern verwendete Zuganker, so dass die Gefahr des Bruches dieses Bauteiles minimiert ist.

Durch die Kombination mit einer vorzugsweise innenliegend der Federeinheit angeordneten Schraubenfeder lassen sich die Rückstellkräfte im Verhältnis zu den Vorspannkräften oder Blockkräften ( Federeinheit auf Block beansprucht) einstellen, so dass das Federpaket auch bei Verschmutzung oder Korrosion ausreichend schnell ausfedert, die Stoßkräfte aber dennoch minimiert werden, wobei die Federeinheit und das Schutzrohr auch bei Bruch der Schraubenfeder als Schutzmantel wirken sowie ein Ausbauchen der Schraubenfeder durch die Federeinheit und das Schutzrohr verhindert wird.

Zudem ist eine sichere Längsführung der Federeinheit über den bei der bestimmungsgemäßen Benutzung nach dem Einbau und Vorspannen der Federeinheit unbelasteten Zuganker gewährleistet.

Bei den im Stand der Technik üblichen SchraubenfederZuganker-Kombinationen wird der Zuganker durch über den Federteller der Schraubenfeder eingeleitete Zug-Biege-Kräfte belastet, was die Gefahr des Zugankerbruches steigert.

Die Kombination von Zuganker für die Montagevorspannung und Schutzrohr zur erhöhten Betriebsvorspannung der Federeinheit gibt zusätzliche Sicherheit beim Versagen eines der Bauteile.

Ausführungsbeispiele der Erfindung sind in der Zeichnung gezeigt und im Folgenden näher beschrieben.

Es zeigt:
- Figur 1: eine erfindungsgemäße Vorrichtung in Seitenansicht, teilweise geschnitten;
- Figur 2 und 3: Varianten in gleicher Ansicht.

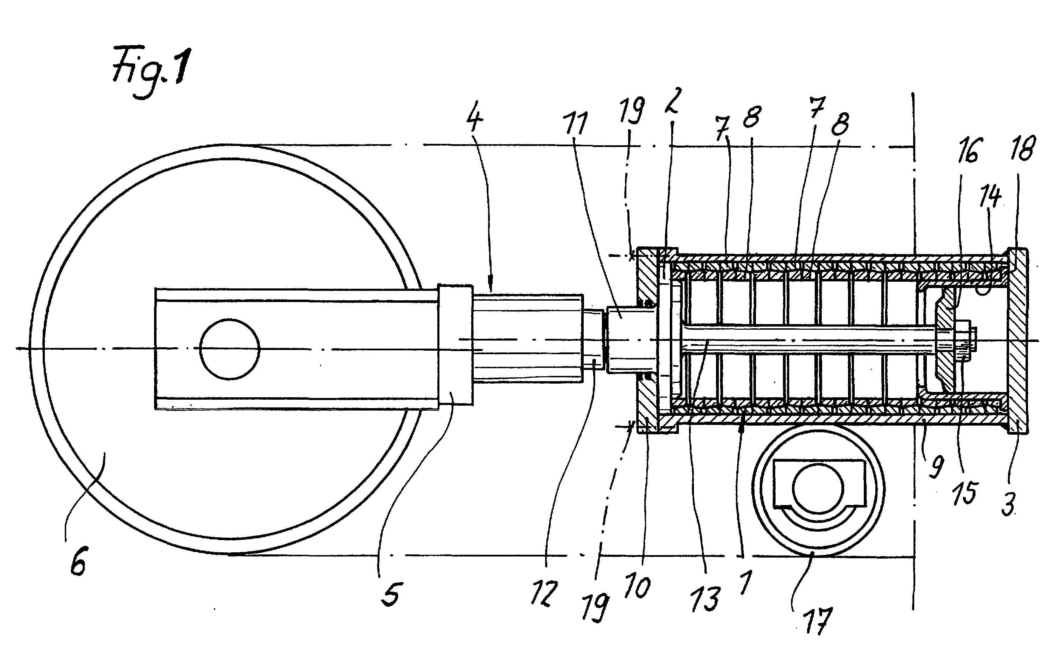

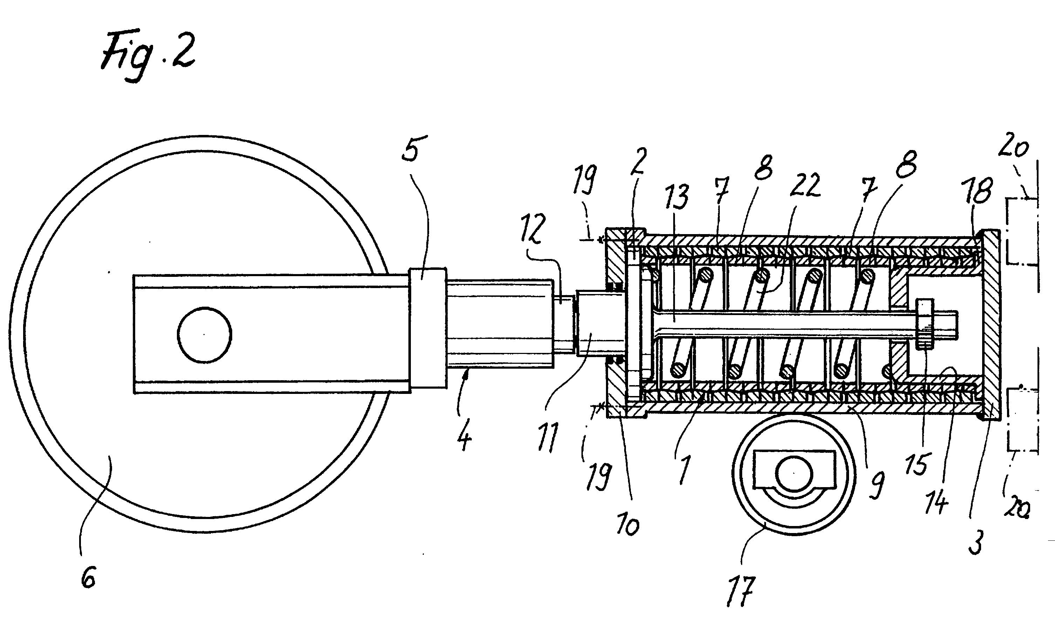

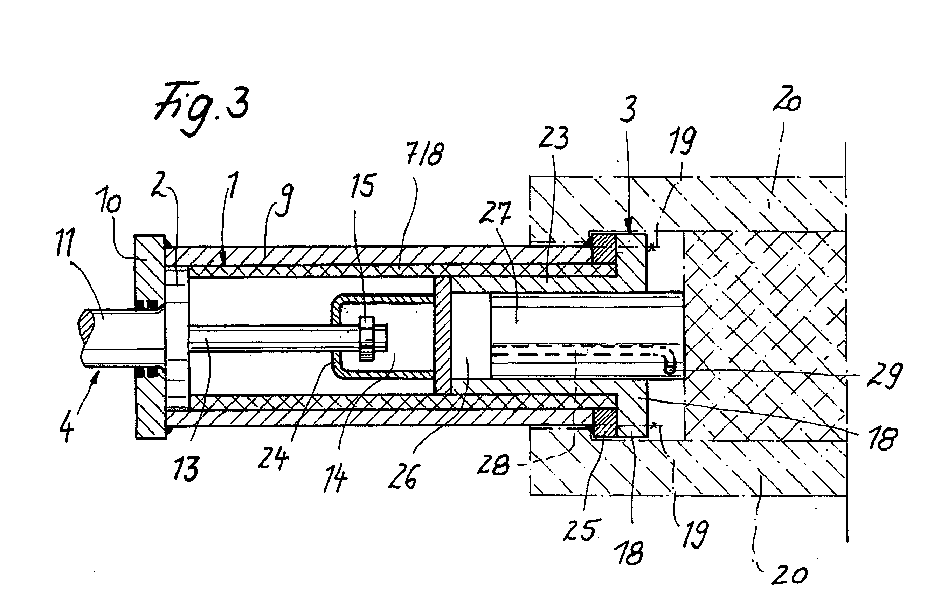

Die in der Zeichnung dargestellte Vorrichtung dient vorzugsweise zum Spannen und Abfedern des Leitrades von Kettenfahrzeugen. Sie besteht aus einer mechanischen Federeinheit 1 mit Spannplatten 2,3 sowie einer vorzugsweise hydraulischen Spanneinheit 4. Die Vorrichtung ist zwischen Gestellteilen 5 des Leitrades 6 und Gestellteilen des Fahrzeugrahmens (20) einspannbar. Als Federeinheit 1 ist dabei eine Einheit aus konzentrisch angeordneten, abwechselnd zug- und druckbeanspruchten Ringen mit konischen Wirkflächen verwendet, die im Ausführungsbeispiel aus zehn Außenringen sowie neun Innenringen und zwei halben Innenringen an den Enden besteht. Die Außenringe sind mit 7 und die Innenringe mit 8 bezeichnet.
Die so gebildete Federeinheit ist von einem Schutzrohr 9 eng umfasst, welches an der an Gestellteilen (20) des Fahrzeugrahmens fixierbaren Spannplatte 3 befestigt ist und in welches die mit der hydraulischen Spanneinheit 4 beaufschlagbare Spannplatte 2 unter zunehmender Vorspannung der Federeinheit (7, 8)einschiebbar ist. Das Schutzrohr 9 ist an seinem fahrzeugrahmenseitigen Ende (in der Zeichnung rechts) durch die Spannplatte 3 und an seinem anderen Ende durch eine Deckplatte 10 verschlossen, wobei die Deckplatte 10 mit dem Schutzrohr 9 verschraubt und die Spannplatte 3 mit dem Schutzrohr 9 verschweißt ist (Fig. 1 + 2) oder die Spannplatte 3 mit dem Schutzrohr 9 verschraubt und die Deckplatte 10 angeschweißt ist (Fig. 3). Die Deckplatte 10 ist von einem Stößel 11 der Spannplatte 2 durchgriffen, auf die ein Stößel 12 der hydraulischen Spanneinheit 4 einwirkt. Durch die Verschraubung oder die Einschraubtiefe der Deckplatte 10 oder Spannplatte 3 kann die Vorspannung der Federeinheit verändert werden.

Die verschiebliche Spannplatte 2 ist mit einem Zuganker 13 verbunden oder einstückig ausgebildet, der die aus den Innen- und Außenringen 7, 8 gebildete Federeinheit koaxial mit großem Spiel durchgreift. Der Zuganker 13 ist an der rahmenfesten Spannplatte 3 mittelbar verschieblich gehaltert, was noch später erläutert wird, wobei dessen Wirklänge zum Zwecke der montagebedingten Vorspannung der Federeinheit verkürzbar ist, was auch noch später erläutert wird.

Das axial verschiebliche Ende des Zugankers 13 ist in einer an der Spannplatte 3 angeordneten Kammer 14 angeordnet, deren Länge in axialer Erstreckung des Zugankers 13 größer ist als dem maximalen Federweg der Federeinheit entspricht. Die Kammer 14 ist durch ein topfartiges Teil mit mündungsseitig nach radial außen vorragendem Flanschrand 18 gebildet. Der Flanschrand 18 liegt an der Spannplatte 3 an und die dortige Stirnfläche der Federeinheit stützt sich am Flanschrand 18 als Widerlager ab.

Bei der Ausführung gemäß Fig. 3 ist der Flanschrand durch den Flansch der Spannplatte 3 gebildet.

Auf das in der Kammer 14 gekapselt angeordnete Ende des Zugankers 13 ist eine Spannmutter 15 aufgeschraubt, so dass die Wirklänge des Zugankers vor der Endmontage verkürzbar ist. Zur Einstellung der Montagevorspannung kann die Federeinheit zusammengedrückt werden, sodass dann die entsprechende Spannmutter 15 zunehmend auf das Ende des Zugankers 13 aufgeschraubt werden kann, um die Vorspannung zu sichern. Die Federeinheit ist dann zwischen dem Flanschrand 18 des die Kammer bildenden topfartigen Teiles und der Spannplatte 2 eingespannt und auf 5 bis 10% vorgespannt.

Gemäß Fig. 1 und 2 kann das Schutzrohr 9 dann auf die vormontierte Einheit aufgeschoben werden, bis sich die am Schutzrohr angeschweißte Spannplatte 3 am Flansch 18 abstützt. Nachfolgend wird dann die Deckplatte 10 mit dem Schutzrohr 9 9 verschraubt und dabei die Federeinheit zunehmend vorgespannt (auf z.B. 50% Vorspannung). Es stellt sich dann die Lage gemäß Zeichnungsfigur ein. Die Verschraubung erfolgt mittels bei 19 angedeuteter Schraubenbefestigungsmittel.

Am in der Kammer 14 befindlichen Ende des Zugankers ist gemäß Fig. 1 zusätzlich eine Führungs- oder Dichtscheibe 16 gehaltert, die in der Kammer 14 in deren Längsrichtung verschieblich ist und die sich an der Kammerwandung über ihren gesamten Umfang führend und/oder auch dichtend abstützt. Unterhalb des Schutzrohres 9 ist in der Zeichnung noch eine Laufrolle 17 angedeutet, über die der Kettenstrang abläuft, der über das Leitrad 6 geführt ist und am anderen Umlenkpunkt der Kette am Antriebsrad umläuft.

Wie in Fig. 2 angedeutet, kann innerhalb der Federeinheit und konzentrisch dazu eine in gleicher Richtung beanspruchbare Schraubenfeder 22 eingefügt sein, die sich an der Spannplatte 2 und unmittelbar oder mittelbar unter Zwischenanordnung des Teiles 14 an der Spannplatte 3 abstützt. Durch Bemessung und auch ggf. Vorspannung der Schraubenfeder 22 lassen sich die Rückstellkräfte der Federeinheit einstellen, so dass eine schnelle Ausfederung bei Entlastung erreicht wird und dennoch die Stoßkräfte minimiert sind.

Bei der Ausführungsform nach Fig. 3 wird zum Zwecke der Vormontage die Federeinheit zwischen der Spannplatte 2 und der Spannplatte 3 als Bestandteil eines topfartigen Elementes 23, an dem das Element 24, welches die Kammer 14 bildet, angeordnet und unter Anzug der Mutter 15 auf dem Zuganker 13 vorgespannt (auf etwa 5 bis 10 % ).

Nachfolgend wird das Schutzrohr 9 samt Deckplatte 10 über das Bauteil geschoben.

Der endseitige Flansch 25 wird dann z.B. mittels Schrauben 19 gegen die Spannplatte 3 angezogen, wobei die Federeinheit zunehmend vorgespannt und die Mutter 15 entlastet wird, da der Zuganker nun zunehmend tiefer in die Kammer 14 eintaucht, wie in Fig. 3 gezeigt ist.

Die komplette Spanneinheit wird dann zwischen Leitrad 6 bzw. Stößel 4 und Fahrwerkgestell 20 eingesetzt. In die Höhlung 26 des Elementes 23 greift dabei ein Kolben 27 ein. Der Kolben 27 weist mindestens eine axiale Bohrung 28 auf, die einerseits außenliegend und gut zugänglich einen Schmiernippel oder dergleichen 29 aufweist und andererseits in den Raum 26 offen ausmündet. Durch Fettzufuhr durch den Nippel 29 in den Raum 26 wird die Spanneinheit relativ zum Kolben 27 nach links verschoben und das Leitrad 6 gegen die aufgelegte Kette 30 angespannt.
Die Kette 30 wird somit gespannt und die Spanneinheit befindet sich in Sollage.

Zum Ausbau wird das Fett aus dem Raum 26 abgelassen, so daß die Kette 30 entspannt ist.

## Patentansprüche

1. Vorrichtung zum Spannen und Abfedern des Leitrades von Kettenfahrzeugen und dergleichen mit bandförmigen Elementen angetriebenen Fahrzeugen, oder des Leitrades (6) von Band- oder Kettenförderern, bestehend aus einer mechanischen Federeinheit (1) mit Spannplatten (2,3) sowie vorzugsweise einer hydraulischen Spanneinheit (4), wobei die Vorrichtung zwischen Gestellteilen (5) des Leitrades (6) und des Rahmens des Fahrzeuges oder des Förderers einspannbar ist, **dadurch gekennzeichnet, dass** die Federeinheit aus konzentrisch angeordneten, abwechselnd zug- und druckbeanspruchten Ringen mit konischen Wirkflächen mit mehreren koaxial zueinander angeordneten Außenringen (7) und Innenringen (8) oder aus mehreren zueinander koaxial angeordneten ineinander gesetzten oder aneinander gesetzten solchen Federeinheiten oder mehreren parallel zueinander angeordneten solchen Federeinheiten besteht.

2. Vorrichtung nach Anspruch 1, **dadurch gekennzeichnet, dass** Federeinheiten mit mindestens acht Außenringen (7) und Innenringen (8) verwendet werden.

3. Vorrichtung nach Anspruch 1 oder 2, **dadurch gekennzeichnet, dass** die Federeinheit oder Federeinheiten von einem Schutzrohr (9) eng umfasst ist oder sind, welches an der an Gestellteilen (20) des Fahrzeugrahmens fixierbaren Spannplatte (3) befestigt ist und in welches die mit der hydraulischen Spanneinheit (4) beaufschlagbare Spannplatte (2) unter zunehmender Vorspannung der Federeinheit einschiebbar ist.

4. Vorrichtung nach Anspruch 3, **dadurch gekennzeichnet, dass** das Schutzrohr (9) an seinem fahrzeugrahmenseitigen Ende durch die Spannplatte (3) und an seinem dem Leitrad (6) zugewandten Ende durch eine anschraubbare Deckplatte (10) verschlossen ist, wobei die Deckplatte (10) von einem Stößel (11) der anderen Spannplatte (2) oder von einem auf diese einwirkenden Stößel der hydraulischen Spanneinheit (4) durchgriffen oder durchgreifbar ist.

5. Vorrichtung nach einem der Ansprüche 1 bis 4, **dadurch gekennzeichnet,dass** die verschiebliche Spannplatte (2) einen Zuganker (13) aufweist, der an der rahmenfesten Spannplatte (3) axial verschieblich gehaltert und dessen Wirklänge zum Zwecke der Einstellung der Vorspannung der Federeinheit verkürzbar ist.

6. Vorrichtung nach Anspruch 5, **dadurch gekennzeichnet, dass** das axial verschiebliche Ende des als Stange oder Rohr ausgebildeten Zugankers (13) in einer an der Spannplatte (3) ausgebildeten Kammer (14) angeordnet ist, deren Länge (in axialer Erstreckung des Zugankers (13) ) mindestens gleich oder auch größer ist als dem maximalen Federweg entspricht, wobei auf das in der Kammer (14) befindliche Ende des Zugankers (13) eine Spannmutter (15) aufgeschraubt ist, die sich an Kammerteilen als Widerlager unmittelbar oder mittelbar abstützt, und wobei die Kammer (14) durch eine topfartige Hülse mit Außenflansch (18) gebildet ist, deren Flansch (18) sich an der Spannplatte (3) abstützt und an deren Flansch (18) sich das Ende der Federeinheit abstützt.

7. Vorrichtung nach Anspruch 6,
**dadurch gekennzeichnet, dass** am Ende des Zugankers (13) eine Führungs- und/oder Dichtscheibe (16) gehaltert ist, die in der Kammer (14) in deren Längsrichtung verschieblich ist und die sich an der Kammerwandung über ihren gesamten Umfang führend und/oder dichtend abstützt.

8. Vorrichtung nach einem der Ansprüche 1 bis 7,
**dadurch gekennzeichnet, dass** konzentrisch zur Federeinheit (7,8) mindestens eine in gleicher Richtung beanspruchbare Schraubenfeder (22) angeordnet ist, die sich an der Spannplatte (2) und unmittelbar oder mittelbar unter Zwischenanordnung des Teiles (14) an der Spannplatte (3) abstützt.

9. Vorrichtung nach einem der Ansprüche 1 bis 8,
**dadurch gekennzeichnet, dass** die Vorrichtung gestellseitig (bei 20) mittels eines Fettspanners längsverstellbar, parallel zu den Kettentrums der Kette (30), gehaltert ist.

## Claims

1. A device for the tensioning and springing/shock absorption of the idler of tracked vehicles and similar vehicles driven by belt-shaped components, or of the idler (6) of belt or chain conveyors consisting of a mechanical spring unit (1) having clamping plates (2, 3) and also preferably a hydraulic clamping unit (4), it being possible to clamp the device between mounting parts (5) of the idler (6) and of the frame of the vehicle or of the conveyor,
**characterised in that** the spring unit consists of concentrically arranged rings alternately stressed by tension and pressure, having conical effective areas with several mutually coaxially arranged outer rings (7) and inner rings (8) or of several such spring units which are mutually coaxially arranged, placed one inside the other or placed adjacent to one another, or several such spring units which are disposed parallel to each other.

2. A device according to Claim 1,
**characterised in that** spring units having at least eight outer rings (7) and inner rings (8) are used.

3. A device according to Claim 1 or 2,
**characterised in that** the spring unit or spring units is or are tightly encircled by a protecting tube (9), which is fastened to the clamping plate (3) fixable to mounting parts (20) of the vehicle frame and into which the clamping plate (2) that can be acted upon by the hydraulic spring unit (4) can be inserted under increasing initial stress of the spring unit.

4. A device according to Claim 3,
**characterised in that** the protecting tube (9) is closed at its end closer to the vehicle frame by the clamping plate (3) and at its end closer to the idler (6) by a screw-down cover plate (10), the cover plate (10) being penetrated or being able to be penetrated by a slide (11) of the other clamping plate (2) or by a slide of the hydraulic clamping unit (4) that acts on said clamping plate.

5. A device according to one of Claims 1 to 4,
**characterised in that** the displaceable clamping plate (5) comprises a tension rod (13), which is axially displaceably mounted on the clamping plate (3) fixed to the frame and the effective length of which can be shortened for the purpose of adjusting the initial tension of the spring unit.

6. A device according to Claim 5,
**characterised in that** the axially displaceable end of the tension rod (13) constructed as a rod or tube is disposed in a chamber (14) constructed at the clamping plate (3), the length of which (in the axial extension of the tension rod (13)) is at least equal to or is also greater than the maximum spring excursion, wherein onto the end of the tension rod (13) situated in the chamber (14) a tensioning nut (15) is screwed, which is supported directly or indirectly on chamber parts as an abutment, and wherein the chamber (14) is formed by a pot-shaped sleeve with outer flange (18), the flange (18) of which is supported on the clamping plate (3) and the end of the spring unit is supported on its flange (18).

7. A device according to Claim 6,
**characterised in that** mounted on the end of the tension rod (13) is a guide and/or sealing washer (16), which is displaceable in the chamber (14) in its longitudinal direction and which is supported in guiding and/or sealing manner over its entire circumference on the chamber wall.

8. A device according to one of Claims 1 to 7,
**characterised in that** concentrically to the spring unit (7, 8) is disposed at least one helical spring (22), which can be stressed in the same direction, and which at the clamping plate (2) is supported directly or indirectly with the intermediate provision of the part (14) at the clamping plate (3).

9. A device according to one of Claims 1 to 8,
**characterised in that** at the mounting side (at 20) the device is mounted by means of a grease strainer in longitudinally adjustable manner, parallel to the strand of the chain (30).

## Revendications

1. Dispositif pour la tension et la suspension de la roue directrice de véhicules à chenilles et véhicules analogues entraînés par des éléments en forme de bande, ou de la roue directrice (6) de convoyeurs à bande ou à chaîne, constitué d'une unité mécanique de ressort (1) dotée de plaques de tension (2, 3), et de préférence d'une unité hydraulique de tension (4), le dispositif pouvant être tendu entre des éléments de bâti (5) de la roue directrice (6) et le châssis du véhicule ou du convoyeur, **caractérisé en ce que** l'unité de ressort est constituée de bagues disposées concentriquement, alternativement sollicitées en traction et en compression, dotées de faces actives coniques, avec plusieurs bagues extérieures (7) et bagues intérieures (8) disposées coaxialement entre elles, ou est constituée de plusieurs unités de ressort de ce genre disposées coaxialement entre elles, placées les unes dans les autres ou les unes contre les autres, ou de plusieurs unités de ressort de ce genre disposées parallèlement entre elles.

2. Dispositif selon la revendication 1, **caractérisé en ce qu'**on utilise des unités de ressort avec au moins huit bagues extérieures (7) et bagues intérieures (8).

3. Dispositif selon la revendication 1 ou 2, **caractérisé en ce que** la ou les unités de ressort sont étroitement entourées par un tube de protection (9), qui est fixé sur la plaque de tension (3) pouvant être immobilisée contre des éléments de bâti (20) du châssis du véhicule, et dans lequel peut être enfilée, sous une précontrainte croissante de l'unité de ressort, la plaque de tension (2) qui peut être sollicitée par l'unité hydraulique de tension (4).

4. Dispositif selon la revendication 3, **caractérisé en ce que** le tube de protection (9) est fermé à son extrémité côté châssis du véhicule par la plaque de tension (3) et, à son extrémité tournée vers la roue directrice (6), par une plaque de recouvrement vissable (10), la plaque de recouvrement (10) étant traversée ou pouvant être traversée par un poussoir (11) de l'autre plaque de tension (2) ou par un poussoir de l'unité hydraulique de tension (4) qui agit sur cette plaque.

5. Dispositif selon l'une des revendications 1 à 4, **caractérisé en ce que** la plaque de tension coulissante (2) présente un tirant (13) qui est maintenu à coulissement axial sur la plaque de tension (3) solidaire du châssis et dont la longueur active peut être raccourcie afin de régler la précontrainte de l'unité de ressort.

6. Dispositif selon la revendication 5, **caractérisé en ce que** l'extrémité axialement coulissante du tirant (13) réalisé sous forme de barre ou de tube est disposée dans une chambre (14) formée sur la plaque de tension (3), chambre dont la longueur (dans la direction axiale du tirant (13)) est au moins égale ou encore supérieure à la course maximale de ressort, un écrou de tension (15) étant vissé sur l'extrémité du tirant (13) qui se trouve dans la chambre (14), écrou qui s'appuie directement ou indirectement contre des éléments de chambre comme contre-appui, et la chambre (14) étant formée par une douille en forme de pot dotée d'une bride extérieure (18), dont la bride (18) s'appuie contre la plaque de tension (3) et contre la bride (18) de laquelle s'appuie l'extrémité de l'unité de ressort:

7. Dispositif selon la revendication 6, **caractérisé en ce qu'**une rondelle (16) de guidage et/ou d'étanchéité est maintenue à l'extrémité du tirant (13), rondelle qui est coulissante dans la chambre (14) dans la direction longitudinale de celle-ci, et qui s'appuie en guidage et/ou en étanchéité contre la paroi de la chambre sur toute sa circonférence.

8. Dispositif selon l'une des revendications 1 à 7, **caractérisé en ce qu'**au moins un ressort à boudin (22) est disposé concentriquement à l'unité de ressort (7, 8), ressort qui peut être sollicité dans la même direction et qui s'appuie contre la plaque de tension (2) et directement ou indirectement, avec intercalation de l'élément (14), contre la plaque de tension (3).

9. Dispositif selon l'une des revendications 1 à 8, **caractérisé en ce que** le dispositif est maintenu côté châssis (en 20) avec possibilité de réglage longitudinal parallèlement au brin de la chaîne (30), au moyen d'un tendeur à graisse.
